# EUROPÄISCHE PATENTSCHRIFT

(11) **EP 1 009 137 B1**
(45) Veröffentlichungstag und Bekanntmachung des Hinweises auf die Patenterteilung: **16.01.2008**
(21) Anmeldenummer: 00101436.4
(22) Anmeldetag: 25.01.2000
(51) Int. Cl.: H04L 29/06, H04Q 7/22, G06F 17/30, H04M 1/247

(54) **Verfahren, Rechner und Rechnerprogrammprodukt zum Zugriff auf Ortsangaben enthaltende Daten**
Method, computer and computer program product for access to location dependent data
Méthode, ordinateur et progiciel pour l'accès à des informations dépendantes de l'emplacement

(43) Veröffentlichungstag der Anmeldung: 14.06.2000
(73) Patentinhaber: Whitestein Information Technology Group AG, 6300 Zug (CH)
(72) Erfinder: Nopper,Norbert, 78048 Villingen-Schwenningen (DE); Kammerer,Kurt, 78183 Hüfingen (DE)
(74) Vertreter: Schaumburg, Thoenes, Thurn, Landskron

(56) Entgegenhaltungen:
- EP-A- 0 967 545
- EP-A- 0 982 672
- WO-A-00/29979
- WO-A-97/32439
- FUJINO N ET AL: "MOBILE INFORMATION SERVICE BASED ON MULTI-AGENT ARCHITECTURE" IEICE TRANSACTIONS ON COMMUNICATIONS,JP,INSTITUTE OF ELECTRONICS INFORMATION AND COMM. ENG. TOKYO, Bd. E80-B, Nr. 10, 1. Oktober 1997 (1997-10-01), Seiten 1401-1406, XP000734533 ISSN: 0916-8516
- "METHOD FOR USING GLOBAL POSITION SYSTEM TO FIND CLOSE SERVICES" IBM TECHNICAL DISCLOSURE BULLETIN,US,IBM CORP. NEW YORK, Bd. 41, Nr. 1, 1. Januar 1998 (1998-01-01), Seite 693 XP000772259 ISSN: 0018-8689

## Beschreibung

Die Erfindung betrifft ein Verfahren zum Zugriff auf Ortsangaben enthaltende Daten, bei dem von einem Endgerät aus an einen Rechner eines Datenfernübertragungsnetzes, z.B. des Internets, eine Anforderung zum Ermitteln von Daten übertragen wird.

Derzeit wird ein Zugriff auf Ortsangaben enthaltende Daten im Internet beispielsweise ausgeführt, indem mit Hilfe eines Datensichtprogrammes, auch "Browser" genannt, eine WEB-Seite aufgerufen wird. Beispielsweise enthält die WEB-Seite mit der Adresse http:\\www.cinema.de ein Verzeichnis einer Vielzahl von Kinos in Deutschland. Durch die Angabe des Namens einer Stadt läßt sich erreichen, daß nur Angaben zu den Kinos dieser Stadt auf der WEB-Seite dargestellt werden.

Das Zugriffsverfahren hat den Nachteil, daß die Ortsangabe erst berücksichtigt wird, nachdem zum Endgerät bereits eine Vielzahl von Informationen übertragen worden ist, die für eine Bedienperson des Endgerätes ohne Bedeutung sind.

Außerdem gibt es möglicherweise auch andere WEB-Seiten im Internet, die Angaben zu Kinos enthalten, die auf der genannten WEB-Seite nicht aufgeführt sind, bzw. auf denen kurzfristige Änderungen früher als auf der genannten WEB-Seite berücksichtigt worden sind. Für den Zugriff auf weitere WEB-Seiten müßte die Bedienperson weitere Verbindungen aufbauen.

Aus dem Dokument "Method for using global position system to find close services", IBM Technical Disclosure Bulletin, Bd. 41, Nr. 1, 1. Januar 1998, XP000772259, ist bekannt, die Position eines Laptop-Computers mit Hilfe eines Global Positioning System des Laptop-Computers zu erfassen. Nach einer Suchanfrage über eine Homepage der Suchmaschine wird für jedes Ergebnis die Entfernung zwischen bestimmter Position des Laptop-Computers und der dem Suchergebnis zugeordneten Position ermittelt und mit einem vorgegebenen maximalen Entfernungswert verglichen.

Aus dem nachveröffentlichten Dokument WO A 00/29979 ist ein Verfahren zur standortabhängigen Informationsbeschaffung aus einer Datenbank mit Suchmaschine bekannt.

Es ist Aufgabe der Erfindung, zum Zugriff auf Ortsangaben enthaltende Daten ein einfaches Verfahren anzugeben, bei dem mit geringem Bedienaufwand eine Vielzahl von im Internet gespeicherten Daten berücksichtigt werden. Außerdem sollen ein zugehöriges Programm und ein zugehöriger Rechner angegeben werden.

Die das Verfahren betreffende Aufgabe wird durch ein Verfahren mit den im Patentanspruch 1 angegebenen Verfahrensschritten gelöst. Weiterbildungen sind in den Unteransprüchen angegeben.

Die Erfindung geht von der Überlegung aus, daß sich Anforderungen, bei deren Bearbeitung auf Ortsangaben enthaltende Daten zugegriffen werden muß, in der überwiegenden Zahl auf Ortsangaben beziehen, die mit dem Standort des Endgerätes unmittelbar zusammenhängen. Somit sollte die Standortsangabe über den Standort des Endgerätes bei der Bearbeitung der Anforderung automatisch einbezogen werden. Außerdem geht die Erfindung von der Erkenntnis aus, daß Daten, die Ortsangaben enthalten oder die einen engen Bezug zu Ortsangaben haben, im Internet auf einer Vielzahl von Seiten gespeichert sind, die sich nur mit einem sehr hohen Aufwand manuell auswerten lassen. Hinzu kommt, daß die Daten oft geändert werden. Auf der anderen Seite sind Programme bekannt, die eine Bedienperson im Netz vertreten und für sie automatisch Daten sammeln, auswerten und sogar Entscheidungen für die Bedienperson treffen. Solche Programme werden auch als Software-Agenten bezeichnet. Der Einsatz solcher Programme im Zusammenhang mit Daten, die sich auf Ortsangaben beziehen, eröffnet eine Vielzahl neuer Anwendungsmöglichkeiten.

Beim erfindungsgemäßen Verfahren wird von einem Endgerät aus an einen Rechner eines Datenübertragungsnetzes, z.B. des Internets, eine Anforderung zum Ermitteln von Daten übertragen. Eine Standortsangabe über den Standort des Endgerätes ist bei einer Ausführungsform in der Anforderung enthalten und wird bei einer anderen Ausführungsform auf andere Art ermittelt. Auf dem Rechner werden durch einen Prozessor Befehle eines Programms ausgeführt, das die Funktion eines Software-Agenten hat. Das heißt, das Programm baut für den Anfragenden automatisch zum Ermitteln von Daten für die Bearbeitung der Anforderung Verbindungen zu einer Vielzahl von Diensterbringungsrechnern des Datenfernübertragungsnetzes auf. Abhängig von der Standortsangabe wertet das Programm die Daten aus und erzeugt eine Antwort, die an das Endgerät übertragen wird. Software-Agenten sind Programme, die in einem digitalen, vernetzten Umfeld selbständig Aufgaben im Auftrag eines Benutzers erledigen, d.h. hier für die Bedienperson des Endgerätes.

Durch das erfindungsgemäße Verfahren kann eine Antwort erzeugt werden, für die trotz eines sehr geringen Bedienaufwandes durch eine Bedienperson des Endgerätes Daten berücksichtigt werden, die auf einer Vielzahl von WEB-Seiten in verschiedenen Diensterbringungsrechnern gespeichert sind. Die Bedienperson muß nur ihre Anforderung am Endgerät eingeben. Die anderen Schritte lassen sich automatisch durchführen. Das Berücksichtigen der Standortsangabe bei der Bearbeitung der Anforderung durch den Software-Agenten gewährleistet, daß die vom Software-Agenten gesammelten Daten abhängig von der Standortsangabe vorsortiert werden können. Das Sortierkriterium wird dabei von der Seite des Endgerätes vorgegeben, nämlich durch dessen Standort.

Bei einer Weiterbildung des erfindungsgemäßen Verfahrens verändert sich der Standort des Endgerätes nach dem Übertragen der Anforderung. Aus in der Anforderung enthaltenen Daten wird eine neue Standortsangabe ermittelt, die bei der Auswertung der Daten durch den Software-Agenten berücksichtigt wird. Beispielsweise enthält die Anforderung zusätzlich zur Standortsangabe eine Richtung, in der sich das Endgerät bewegt. Ist die Geschwindigkeit der Bewegung bekannt oder läßt sich die Geschwindigkeit abschätzen, so läßt sich mit Hilfe der Gleichungen für eine gleichmäßige Bewegung leicht ermitteln, zu welchen Zeiten das Endgerät an welchen Standorten ist. Durch eine zusätzliche Zeitangabe in der Anforderung kann der zukünftige Standort des Endgerätes zu diesem Zeitpunkt vorausberechnet werden und die Bearbeitung der Anforderung auf diesen zukünftigen Standort ausgerichtet werden.

Als mobile Endgeräte werden unter anderem Mobilfunktelefone und transportable Rechner mit einem Mobilfunk-Internetanschluß eingesetzt. Wird der Standort des Endgerätes durch eine Bedienperson eingegeben, so müssen keine technischen Einrichtungen zur Ermittlung des Standortes eingesetzt werden. Andererseits läßt sich der Standort eines Mobiltelefons aufgrund der Einteilung des Telekommunikationsnetzes in kleine Zellen auf einfache Art und mit geringem Aufwand ermitteln.

Bei einer anderen Weiterbildung sind die Daten in Speichern der Diensterbringungsrechner gemäß einer Seitenbeschreibungssprache gespeichert, z.B. der Seitenbeschreibungssprache HTML (Hyper Text Markup Language). Für die Programmierung des Software-Agenten werden neueste Technologien eingesetzt, z.B. die Programmiersprache JAVA oder JAVASCRIPT. Diese Technologien sind extra für das Internet und damit auch für die Seitenbeschreibungssprache HTML entwickelt worden.

Bei einer Ausgestaltung wird eine Verbindung zum Übertragen der Anforderung unmittelbar nach dem Übertragen der Anforderung abgebaut. Erst nach dem Bearbeiten der Anforderung und dem Erzeugen der Antwort wird eine andere Verbindung zum Übertragen der Antwort aufgebaut. Durch das Verwenden von Kurznachrichten, auch Short-Message-Service genannt, lassen sich beispielsweise Verbindungsgebühren einsparen.

Das Endgerät überträgt bei einer anderen Ausgestaltung Daten nach einem Protokoll für die Datenübertragung, das auch im Datenfernübertragungsnetz verwendet wird. Dieses Protokoll ist beispielsweise das im Internet eingesetzte Protokoll TCP/IP (Transmission Control Protocol/internet Protocol). Ein Beispiel für ein solches Endgerät ist ein transportabler Rechner mit einem mobilen Internetanschluß. Eingesetzt werden auch Verfahren, bei denen das Endgerät Daten nach einem Protokoll überträgt, das ausgehend von dem im Datenfernübertragungsnetz verwendeten Protokoll, extra für mobile Endgeräte entwickelt worden ist, z.B. das Protokoll WAP (Wireless Application Protocol) für Mobilfunkgeräte.

Alternativ werden Endgeräte eingesetzt, die Daten gemäß einem Protokoll übertragen, das sich von dem für das Datenfernübertragungsnetz festgelegten Protokoll unterscheidet. So kann das Endgerät für die Datenübertragung in einem Fernsprechnetz oder in einem Mobilfunknetz ausgelegt sein. In diesem Fall benötigt das Endgerät selbst keinen Zugang zum Datenfernübertragungsnetz. Der separate Aufbau von Verbindungen für das Übertragen der Anforderung und der Antwort bietet sich insbesondere an, wenn die Nutzung des Fernsprechnetzes im Vergleich zur Nutzung eines Datenübertragungsnetzes teurer ist.

Bei einer Ausführungsform wird die Standortsangabe von einer Bedienperson des Endgerätes über eine Tastatur oder über eine Spracheingabeeinheit eingegeben.

Das erfindungsgemäße Verfahren und seine Weiterbildungen werden bei einer Weiterbildung bei Anforderungen eingesetzt, die vordergründig auf das Ermitteln von Ortsangaben gerichtet sind. Insbesondere bei Ortsangaben, die den Ort einer Tankstelle, einer Raststätte, einer Übernachtungsmöglichkeit, eines Geldautomaten oder eines Kundendienstes für Fahrzeuge betreffen, ist der Aufwand für die Durchführung des Verfahrens gerechtfertigt, weil solche Angaben besondere häufig benötigt werden. Hinzu kommt, daß Anforderungen zu diesen Angaben hauptsächlich von Endgeräten aus gestellt werden, deren Standort an einer Autobahn oder einer Fernverkehrsstraße liegt. Insbesondere ist der Aufwand für das Programm des Software-Agenten gerechtfertigt, weil einmal gesammelte Daten immer wieder verwendet werden.

Bei einer Ausgestaltung werden die automatischen Verbindungen nach dem Übertragen der Anforderung aufgebaut. Bei dieser Ausgestaltung wird auf an anderer Stelle im Internet vorhandene Datenbanken zugegriffen. Das Anlegen einer eigenen Datenbank im Speicher des Rechners, auf dem das Programm zum Ermitteln der Daten ausgeführt wird, entfällt. Demzufolge sind keine Verfahrensschritte zum Erstellen und Pflegen eines eigenen Datenbestandes erforderlich.

Die Erfindung betrifft außerdem ein Programm nach Anspruch 12 zum Durchführen des erfindungsgemäßen Verfahrens und dessen Weiterbildungen sowie einen Rechner, auf dem das Programm gespeichert ist. Somit gelten für das Programm und den Rechner die oben für das erfindungsgemäße Verfahren und seine Weiterbildungen genannten Wirkungen entsprechend.

Im folgenden wird ein Ausführungsbeispiel der Erfindung an Hand der beiliegenden Zeichnungen erläutert. Darin zeigen:
- Figur 1: eine von einem Mobilfunktelefon aus eingegebene Anforderung für einen Suchdienst,
- Figur 2: ein Flußdiagramm mit Verfahrensschritten zur Bearbeitung der Anforderung, und
- Figur 3: die Suche von Daten im Internet unter Einsatz eines Suchprogramms.

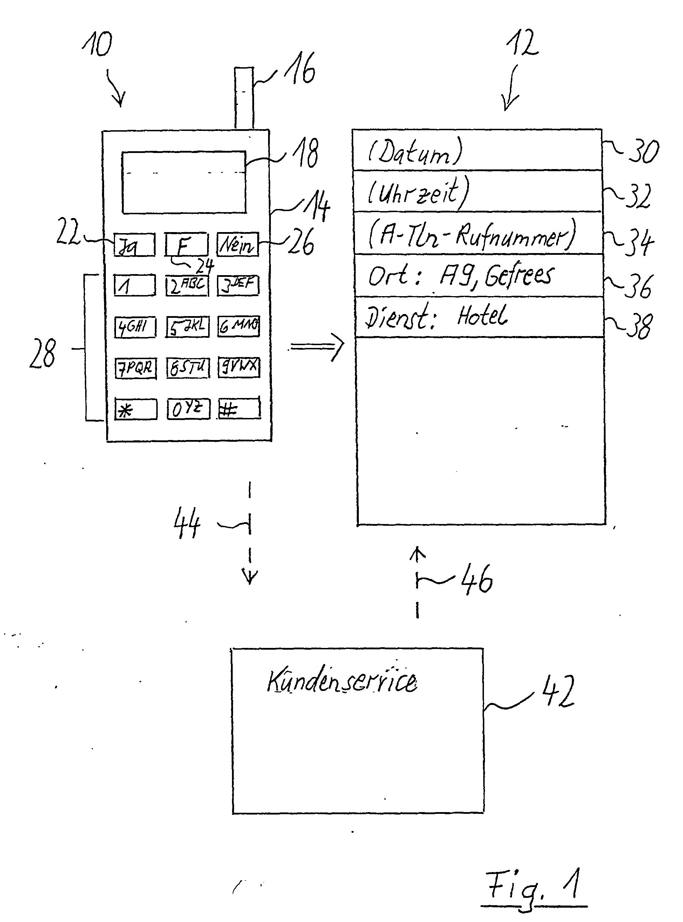

Figur 1 zeigt ein Mobiltelefon 10, mit dessen Hilfe eine Anforderung 12 erzeugt wird. Ein Gehäuse 14 des Mobiltelefons 10 enthält die elektronischen Baueinheiten und dient zur Aufnahme einer Antenne 16 eines LC-Displays (Liquid Cristal Display), von Steuertasten 22 bis 26 sowie von Tasten eines Nummernblocks 28.

Auf dem LC-Display 18 werden abhängig von der Bedienung der Steuertasten 22 bis 26 verschiedene Menüpunkte zur Auswahl angeboten. Außerdem werden mit Hilfe des Nummernblocks 28 eingegebene Zeichen auf dem LC-Display 18 dargestellt.

Die Steuertasten 22 und 26 werden bei der Annahme eines Rufes, beim Senden eines Rufes und beim Beenden eines Gespräches genutzt. Die Steuertaste 24 ermöglicht es, verschiedene Steuermenüs aufzurufen. Die Tasten des Nummernblocks dienen zur Eingabe der Ziffern Null bis Neun sowie der Buchstaben des Alphabets.

Es sei angenommen, daß eine Bedienperson des Mobiltelefons 10 eine Anforderung an einen Suchdienst zur Ermittlung eines Hotels senden möchte. Mit Hilfe der Steuertaste 24 wird ein Steuermenü aufgerufen, das es ermöglicht, Daten für die Datenfelder der Anforderung 12 einzugeben.

Die Anforderung 12 enthält Datenfelder 30 bis 38. Im Datenfeld 30 wird automatisch beim Erzeugen der Anforderung 12 das aktuelle Datum eingetragen. Die aktuelle Uhrzeit wird automatisch im Datenfeld 32 gespeichert. Im Datenfeld 34 wird die Rufnummer gespeichert, unter der das Mobiltelefon 10 erreichbar ist. Die Bedienperson gibt ihren momentanen Standort über den Nummernblock 28 ein. Im Beispiel sei angenommen, daß sich die Bedienperson und damit auch das Mobilfunktelefon 10 auf der Autobahn A9 in der Nähe der Abfahrt Gefrees befindet. Die Standortsangaben werden im Datenfeld 36 gespeichert. Über das im Display 18 dargestellte Menü wird die Bedienperson dann aufgefordert, einen Dienst auszuwählen. Zur Auswahl stehen die Suche einer Tankstelle, die Suche einer Raststätte, die Suche eines Hotels, die Suche eines Geldautomaten und die Suche eines Kundendienstes für Fahrzeuge. Die Bedienperson wählt als Dienst die Suche nach einem Hotel aus. Der Dienst wird im Datenfeld 38 vermerkt.

Die Anforderung 12 wird bei einem anderen Ausführungsbeispiel durch Anruf eines Kundenservices 42 erzeugt, siehe Pfeile 44 und 46. Die Bedienperson ruft den Kundenservice 42 an und übermittelt einem Mitarbeiter oder einem automatischen Spracherkennungssystem die in den Datenfeldern 36 und 38 zu speichernden Daten. Das Datum und die Uhrzeit sind auch dem Kundenservice 42 bekannt, so daß entsprechende Daten ohne vorherige Übermittlung in die Anforderung 12 eingetragen werden. Die Rufnummer wird durch das Mobiltelefon 10 an den Kundenservice 42 automatisch übermittelt und anschließend in das Datenfeld 34 eingetragen.

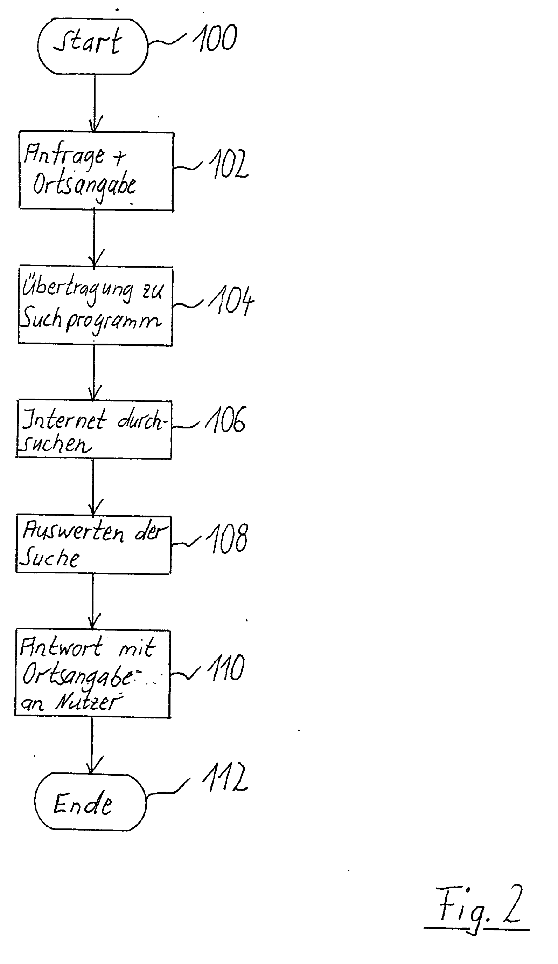

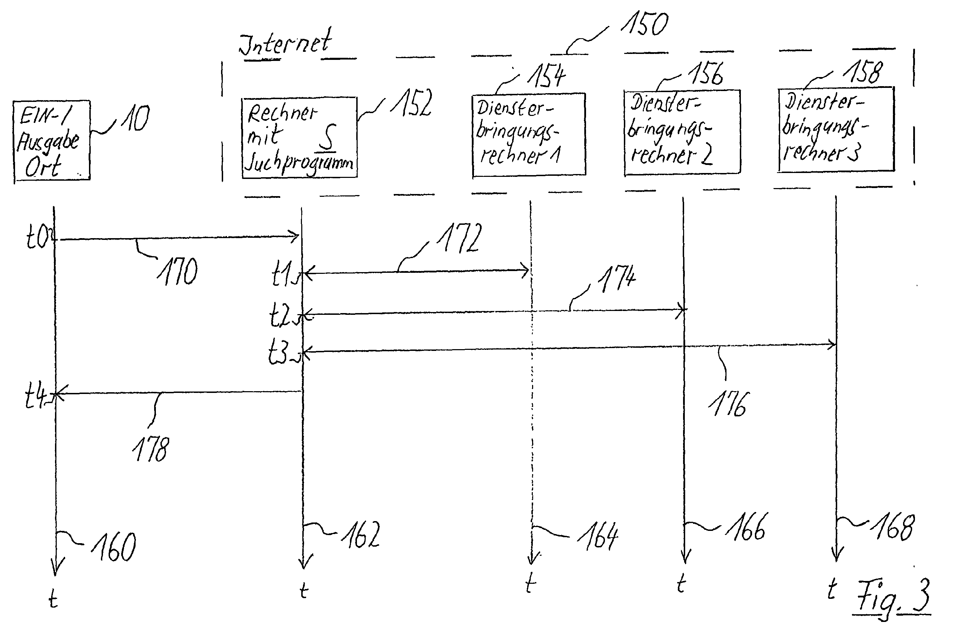

Wird die Anforderung 12 direkt vom Mobiltelefon 10 aus erzeugt, so wird zur Übertragung der Anforderung 12 eine Kurznachricht gesendet, auch SMS-Nachricht (Short Message Service) genannt. Die Bearbeitung der Anforderung wird unten an Hand der Figuren 2 und 3 erläutert.

Bei anderen Ausführungsbeispielen enthält die Anforderung 12 außerdem Angaben über die Richtung, in der sich die Bedienperson des Mobiltelefons 10 und damit auch das Mobiltelefon 10 selbst bewegen. Die Geschwindigkeit der Bewegung wird abgeschätzt, z.B. 100 km/h, oder ebenfalls durch die Bedienperson eingegeben oder auf andere Art ermittelt. Außerdem enthält die Anforderung 12 eine Zeitangabe, z.B. zwei Stunden, die zur Bestimmung des zukünftigen Standortes des Mobiltelefons 10 herangezogen wird.

Figur 2 zeigt ein Flußdiagramm mit Verfahrensschritten zur Bearbeitung der Anforderung 12, so daß im folgenden auch auf die Figur 1 Bezug genommen wird. Das Verfahren beginnt in einem Verfahrensschritt 100. In einem folgenden Verfahrensschritt 102 wird die Anforderung 12 erzeugt, wobei unter anderem der Standort des Mobilfunktelefons 10 im Datenfeld 36 eingegeben wird.

In einem Verfahrensschritt 104 wird die Anforderung 12 vom Mobiltelefon 10 zu einem Suchrechner (Software-Agent) übermittelt, der vom Dienstanbieter des Suchdienstes betrieben wird. Das Suchprogramm liest die in der Anforderung 12 enthaltenen Daten und beginnt mit einer Suche im Internet, siehe Verfahrensschritt 106. Der Suchvorgang wird unten an Hand der Figur 3 näher erläutert.

In einem Verfahrensschritt 108 wertet das Suchprogramm die Suchergebnisse aus. Von den im Verfahrensschritt 106 ermittelten Hotels wird ein Hotel ausgewählt, das möglichst nah am Standort des Endgerätes 10, d.h. möglichst nahe am im Datenfeld 36 angegebenen Ort liegt. Außerdem wird durch eine Abfrage der Seite dieses Hotels automatisch überprüft, ob derzeit noch Gäste aufgenommen werden können. Ist dies der Fall, so wird das Hotel ausgewählt. Andernfalls wird ein weiter entferntes Hotel gesucht, das noch Übernachtungsmöglichkeiten bietet.

In einem Verfahrensschritt 110 wird die Adresse des im Verfahrensschritt 108 ausgewählten Hotels in eine Antwort-Nachricht eingetragen, die vom Suchrechner aus zum Mobiltelefon 10 übertragen wird.

In einem Verfahrensschritt 112 wird das Verfahren beendet. Auf dem Display 18 des Mobiltelefons 10 wird beim Empfang einer Kurznachricht die Adresse des Hotels angezeigt, beispielsweise Ort, Straße und Hausnummer.

Figur 3 zeigt die Suche von Daten im Internet 150. Das Internet 150 ist eine Verknüpfung vieler Datennetze, durch die jeweils mehrere Rechner verbunden sind, von denen in Figur 3 Rechner 152 bis 158 dargestellt sind.

In Figur 3 sind in Querrichtung des Blattes verlaufende Zeitachsen 160 bis 168 dargestellt, auf denen die Zeit t abgetragen ist. Die Zeitachse 160 betrifft Vorgänge im Endgerät 10. Die Zeitachse 162, 164, 166 bzw. 168 betrifft Vorgänge im Rechner 152, 154, 156 bzw. 158. Gleiche Zeitpunkte liegen auf einer Geraden, die in Längsrichtung des Blattes verläuft. Spätere Zeitpunkte liegen näher an der Blattunterkante als frühere Zeitpunkte.

Das Übertragen der Anforderung 12 vom Mobilfunkgerät 10 zum Rechner 152 zu einem Zeitpunkt t0 wird durch einen Pfeil 170 verdeutlicht. Die Anforderung 12 wird über eine nicht dargestellte Übergangseinheit zwischen dem Mobilfunknetz und dem Internet 150 übertragen.

Der Rechner 152 enthält einen Prozessor und eine Speichereinheit, in welcher die Befehle des Suchprogramms gespeichert sind. Das Suchprogramm S sammelt automatisch Daten im Internet 150, filtert die Daten nach vorgegebenen Kriterien und trifft Entscheidungen selbständig. Eine andere Bezeichnung für das Suchprogramm S ist die Bezeichnung Software-Agent. Beim Ausführen des Suchprogramms S wird der Rechner 152 zu Zeitpunkten t1, t2 und t3 nacheinander mit den Rechnern 154, 156 und 158 verbunden, siehe Doppelpfeile 172 bis 176. In Speichereinheiten der Rechner 154, 156 und 158 sind WEB-Seiten gespeichert, die Daten zu Hotels in der Nähe der Autobahn A9 enthalten. Beispielsweise ist auf dem Rechner 154 die WEB-Seite einer Hotelvermittlung für ganz Deutschland gespeichert. Der Rechner 156 enthält die WEB-Seiten mehrerer Hotels, die an der Autobahn A9 liegen. Im Rechner 158 ist die WEB-Seite eines Tourismusverbandes gespeichert. Die Adressen der Rechner 154, 156 und 158 wurden vom Suchprogramm 152 durch Anfragen bei Suchmaschinen zu dem Suchbegriff "Hotel" selbständig ermittelt. Außerdem werden dem Suchprogramm bei einem anderen Ausführungsbeispiel die Adressen von Rechnern vorgegeben.

Das Suchprogramm S sucht in Datenbanken anderer Anbieter auf den Rechnern 154, 156 und 158. Diese Datenbanken sind beispielsweise Oracle-Datenbanken. Der Software-Agent erkennt das Format der Datenbank automatisch und greift entsprechend diesem Format auf die Daten der Datenbank zu. Auf dem Rechner 152 ist keine Datenbank vorhanden, so daß der Betreiber des Suchprogramms S auch keine Daten vorhalten und pflegen muß.

Zwischen dem Zeitpunkt t3 und einem Zeitpunkt t4 wertet das Suchprogramm S die Daten aus, die von den Rechnern 154 bis 158 übermittelt worden sind, siehe auch Figur 2, Verfahrensschritt 108. Zum Zeitpunkt t4 wird die Antwort mit der Ortsangabe des ausgewählten Hotels vom Rechner 152 zum Mobilfunktelefon 10 übertragen, siehe Pfeil 178.

Als Software-Agenten werden sowohl stationäre Agenten eingesetzt, d.h. Programme die ausschließlich auf dem Rechner 152 ausgeführt werden, als auch sogenannte mobile Agenten, die lediglich auf dem Rechner 152 gestartet werden und danach auf den Rechnern 154, 156 und 158 ausgeführt werden.

### Bezugszeichenliste

- 10: Mobilfunktelefon
- 12: Anforderung
- 14: Gehäuse
- 16: Antenne
- 18: LC-Display
- 22 bis 26: Steuertasten
- 28: Nummernblock
- 30 bis 38: Datenfeld
- 42: Kundenservice
- 44, 46: Pfeil
- 100: Start
- 102: Anfrage + Ortsangabe
- 104: Übertragung zu Suchprogramm
- 106: Internet durchsuchen
- 108: Auswerten der Suche
- 110: Antwort mit Ortsangabe an Nutzer
- 112: Ende
- 150: Internet
- 152 bis 158: Rechner
- 160 bis 168: Zeitachse
- 170: Pfeil
- 172 bis 176: Doppelpfeil
- t0 bis t4: Zeitpunkt
- 178: Pfeil
- S: Suchprogramm

## Patentansprüche

1. Verfahren zum Zugriff auf Ortsangaben enthaltende Daten,
bei dem von einem Endgerät (10) aus an einen Rechner (152) eines Datenfernübertragungsnetzes (150) eine Anforderung (12) zum Ermitteln von Daten übertragen wird (170, 102),
der Standort des Endgerätes (10) festgestellt wird,
auf dem Rechner (152) durch einen Prozessor Befehle eines Programms (S) zum Ermitteln von Daten für die Bearbeitung der Anforderung (12) ausgeführt werden, **dadurch gekennzeichnet,**
**daß** aus in der Anforderung (12) enthaltenen Daten oder auf andere Art eine neue Standortsangabe eines sich nach dem Übertragen der Anforderung (12) geänderten Standortes des Endgeräts (10) ermittelt wird,
**daß** das Programm zum Ermitteln der Daten automatisch Verbindungen (172 bis 174) zu einer Vielzahl von Diensterbringungsrechnern (154 bis 158) des Datenfernübertragungsnetzes (150) aufbaut (106) und
**dass** das Programm (S) abhängig vom Standort des Endgerätes (10) die Daten auswertet und eine Antwort erzeugt (108), wobei die neue Standortsangabe bei der Auswertung berücksichtigt wird, und daß die Antwort an das Endgerät (10) übertragen wird (178, 110).

2. Verfahren nach Anspruch 1, **dadurch gekennzeichnet, dass** die Anforderung eine Angabe zur Richtung enthält, in der sich das Endgerät bewegt.

3. Verfahren nach Anspruch 1 oder 2, **dadurch gekennzeichnet, daß** die Daten gemäß einer Seitenbeschreibungssprache in Speichereinheiten der Diensterbringungsrechner (154 bis 158) gespeichert sind.

4. Verfahren nach einem der vorhergehenden Ansprüche, **dadurch gekennzeichnet, daß** eine Verbindung (170) zum Übertragen der Anforderung (12) nach dem Übertragen der Anforderung (12) abgebaut wird,
und daß zum Übertragen der Antwort eine andere Verbindung (178) aufgebaut wird.

5. Verfahren nach einem der vorhergehenden Ansprüche, **dadurch gekennzeichnet, daß** das Endgerät (10) Daten nach einem Protokoll für die Datenübertragung in dem Datenfernübertragungsnetz (150) überträgt.

6. Verfahren nach einem der Ansprüche 1 bis 4, **dadurch gekennzeichnet, daß** das Endgerät (10) Daten nach einem Protokoll überträgt, das sich von einem für das Datenübertragungsnetz (150) festgelegtem Protokoll unterscheidet.

7. Verfahren nach einem der vorhergehenden Ansprüche, **dadurch gekennzeichnet, daß** die Standortsangabe (36) von einer Bedienperson des Endgerätes (10) eingegeben wird.

8. Verfahren nach einem der vorhergehenden Ansprüche, **dadurch gekennzeichnet, daß** die Anforderung (12) auf das Ermitteln des Ortes einer Tankstelle oder einer Raststätte oder einer Übernachtungsmöglichkeit oder eines Kundendienstes für Fahrzeuge gerichtet ist.

9. Verfahren nach einem der vorhergehenden Ansprüche, **dadurch gekennzeichnet, daß** die automatischen Verbindungen nach dem Übertragen der Anforderung aufgebaut werden.

10. Verfahren nach einem der vorhergehenden Ansprüche, **dadurch gekennzeichnet, daß** der Standort des Endgerätes (10) in einer Standortsangabe der Anforderung enthalten ist.

11. Verfahren nach einem der vorhergehenden Ansprüche, **dadurch gekennzeichnet, daß** der Standort des Endgerätes (10) nach Übertragung der Anforderung übermittelt wird.

12. Programm (S) zum Zugriff auf Ortsangaben enthaltende Daten,
mit durch den Prozessor eines Rechners (152) ausführbaren Befehlen, wobei der Rechner (152) beim Ausführen der Befehle die folgenden Schritte ausführt:
Empfang einer Anforderung (12) zum Ermitteln von Daten,
Ermitteln von Daten für die Bearbeitung der Anforderung (12), **dadurch gekennzeichnet, daß** eine neue Standortangabe eines sich nach dem Übertragen der Anforderung (12) geänderten Standorts des Endgerätes (10) aus in der Anforderung (12) enthaltenen Daten oder auf andere Art ermittelt wird, daß mit Hilfe der Befehle zum Ermitteln der Daten Verbindungen zu einer Vielzahl von Diensterbringungsrechnern (154 bis 158) eines Datenfernübertragungsnetzes (150) aufgebaut werden,
daß die Daten abhängig von einer in der Anforderung (12) enthaltenen oder auf andere Art ermittelten Standortsangabe des Endgerätes (10) ausgewertet werden, wobei die neue Standortangabe bei der Auswertung berücksichtigt wird
und daß eine Antwort erzeugt wird, die an das Endgerät (10) übertragen wird.

13. Datenträger, auf dem das Programm (S) zum Zugriff auf Ortsangaben enthaltende Daten nach Anspruch 12 gespeichert ist.

14. Rechner (152) für ein Rechnernetz (150) mit mindestens einer Speichereinheit, **dadurch gekennzeichnet, daß** in der Speichereinheit ein Programm gemäß Anspruch 12 gespeichert ist.

## Claims

1. A method for accessing data containing locational information,
in which a request (12) for determining data is transmitted (170, 102) from a terminal (10) to a computer (152) of a remote data transmission network (150),
the location of the terminal (10) is determined,
on the computer (152) commands of a program (S) for determining data for processing the request (12) are executed by a processor, **characterized**
**in that** from data contained in the request (12) or in another way a new locational information of a location of the terminal (10) is determined, which location has changed after transmission of the request (12),
**in that** the program for determining the data automatically sets up (106) connections (172 to 174) to a plurality of service provider computers (154 to 158) of the remote data transmission network (150) and
**in that** the program (S) evaluates the data dependent on the location of the terminal (10) and generates (108) a response, the new locational information being taken into account in the evaluation, and in that the response is transmitted (178, 110) to the terminal (10).

2. The method according to claim 1, **characterized in that** the request contains an information on the direction in which the terminal moves.

3. The method according to claim 1 or 2, **characterized in that** the data are stored according to a page description language in storage units of the service provider computers (154 to 158).

4. The method according to one of the preceding claims, **characterized in that** a connection (170) for the transmission of the request (12) is cleared after transmission of the request (12), and
**in that** another connection (178) is set up for transmitting the response.

5. The method according to one of the preceding claims, **characterized in that** the terminal (10) transmits data according to a protocol for the data transmission in the remote data transmission network (150).

6. The method according to one of the claims 1 to 4, **characterized in that** the terminal (10) transmits data according to a protocol that differs from a protocol defined for the remote data transmission network (150).

7. The method according to one of the preceding claims, **characterized in that** the locational information (36) is input from an operator of the terminal (10).

8. The method according to one of the preceding claims, **characterized in that** the request (12) is directed to the determination of the location of a gas station or a motorway service area or an overnight accommodation or a vehicle service department.

9. The method according to one of the preceding claims, **characterized in that** the automatic connections are set up after transmission of the request.

10. The method according to one of the preceding claims, **characterized in that** the location of the terminal (10) is contained in a locational information of the request.

11. The method according to one of the preceding claims, **characterized in that** the location of the terminal (10) is only transmitted after transmission of the request.

12. A program (S) for accessing data containing locational information,
with commands to be executed by the processor of a computer (152),
wherein the computer (152) implements the following steps during execution of the commands:
receiving a request (12) for determining data,
determining data for processing the request (12), **characterized in that** a new locational information of a location of a terminal, which location has changed after transmission of the request (12), is determined from data contained in the request (12) or in another way, **in that** with the aid of the commands for determining the data connections to a plurality of service provider computers (154 to 158) of a remote data transmission network (150) are set up,
**in that** the data are evaluated dependent on a locational information of the terminal (10) contained in the request (12) or determined in another way, the new locational information being taken into account in the evaluation,
and **in that** a response is generated which is transmitted to the terminal (10).

13. A data carrier on which the program (S) for accessing data containing locational information according to claim 12 is stored.

14. A computer (152) for a computer network (150) comprising at least one storage unit, **characterized in that** in the storage unit a program according to claim 12 is stored.

## Revendications

1. Méthode d'accès à des données contenant des indications d'emplacement, selon laquelle une demande (12) de calcul de données est transmise (170, 102) à partir d'un terminal (10) à un ordinateur (152) d'un réseau de transmission de données à distance (150), l'emplacement du terminal (10) est déterminé, des instructions d'un programme (S) de calcul de données pour le traitement de la demande (12) sont exécutées sur l'ordinateur (152) par un processeur, **caractérisée en ce qu'**une nouvelle indication d'emplacement d'un emplacement du terminal (10) changeant après la transmission de la demande (12) est calculée à partir de données contenues dans la demande (12) ou autrement, **en ce que** le programme de calcul des données crée (106) automatiquement des connexions (172 à 174) vers une pluralité d'ordinateurs de fourniture de services (154 à 158) du réseau de transmission de données à distance (150), et **en ce que** le programme (S) exploite les données en fonction de l'emplacement du terminal (10) et génère (108) une réponse, la nouvelle indication d'emplacement étant prise en compte lors de l'exploitation, et **en ce que** la réponse est transmise (178, 110) au terminal (10).

2. Méthode selon la revendication 1, **caractérisée en ce que** la demande contient une indication de la direction dans laquelle le terminal se déplace.

3. Méthode selon la revendication 1 ou 2, **caractérisée en ce que** les données sont mémorisées selon un langage de description de page dans des unités de mémoire des ordinateurs de fourniture de services (154 à 158).

4. Méthode selon l'une des revendications précédentes, **caractérisée en ce qu'**une connexion (170) en vue de la transmission de la demande (12) est coupée après la transmission de la demande (12), et **en ce qu'**une autre connexion (178) est créée en vue de la transmission de la réponse.

5. Méthode selon l'une des revendications précédentes, **caractérisée en ce que** le terminal (10) transmet des données suivant un protocole pour la transmission de données dans le réseau de transmission de données à distance (150).

6. Méthode selon l'une des revendications 1 à 4,
**caractérisée en ce que** le terminal (10) transmet des données suivant un protocole qui se distingue d'un protocole défini pour le réseau de transmission de données (150).

7. Méthode selon l'une des revendications précédentes, **caractérisée en ce que** l'indication d'emplacement (36) est saisie par un utilisateur du terminal (10).

8. Méthode selon l'une des revendications précédentes, **caractérisée en ce que** la demande (12) est orientée vers le calcul de l'emplacement d'une station-service ou d'une aire de repos, ou d'une possibilité d'hébergement ou d'un service automobile.

9. Méthode selon l'une des revendications précédentes, **caractérisée en ce que** les connexions automatiques sont créées après la transmission de la demande.

10. Méthode selon l'une des revendications précédentes, **caractérisée en ce que** l'emplacement du terminal (10) est contenu dans une indication d'emplacement de la demande.

11. Méthode selon l'une des revendications précédentes, **caractérisée en ce que** l'emplacement du terminal (10) est communiqué après transmission de la demande.

12. Programme (S) d'accès à des données contenant des indications d'emplacement, présentant des instructions exécutables par le processeur d'un ordinateur (152), l'ordinateur (152) exécutant les étapes suivantes sur exécution des instructions :
réception d'une demande (12) en vue du calcul de données,
calcul de données pour le traitement de la demande (12),
**caractérisé en ce qu'**une nouvelle indication d'emplacement d'un emplacement du terminal (10) changeant après la transmission de la demande (12) est calculée à partir de données contenues dans la demande (12) ou autrement, **en ce que** des connexions vers une pluralité d'ordinateurs de fourniture de services (154 à 158) d'un réseau de transmission de données à distance (150) sont créées avec l'aide des instructions de calcul des données, **en ce que** les données sont exploitées en fonction d'une indication d'emplacement du terminal (10) contenue dans la demande (12) ou calculée autrement, la nouvelle indication d'emplacement étant prise en compte lors de l'exploitation, et **en ce qu'**une réponse est générée, laquelle est transmise au terminal (10).

13. Support de données, sur lequel le programme (S) d'accès à des données contenant des indications d'emplacement selon la revendication 12 est mémorisé.

14. Ordinateur (152) pour un réseau informatique (150), présentant au moins une unité de mémoire, **caractérisé en ce qu'**un programme selon la revendication 12 est mémorisé dans l'unité de mémoire.
